# EUROPEAN PATENT APPLICATION

(11) **EP 4 550 433 A1**
(43) Date of publication of application: **07.05.2025**
(21) Application number: 24177680.6
(22) Date of filing: 23.05.2024
(51) Int. Cl.: H01M 4/04, H01M 10/04, H01M 50/531, H01M 50/536

(54) **SECONDARY BATTERY ELECTRODE AND METHOD OF MANUFACTURING SECONDARY BATTERY ELECTRODE**

(30) Priority: 31.10.2023 KR 20230148105
(71) Applicant: Samsung SDI Co., Ltd., Yongin-si, Gyeonggi-do 17084 (KR)
(72) Inventor: LEE, Sang Heon, 16678 Suwon-si (KR); KO, Young Dae, 16678 Suwon-si (KR); KIM, Kyung, 16678 Suwon-si (KR); KIM, Seo Hyun, 16678 Suwon-si (KR); KIM, Won Seok, 16678 Suwon-si (KR); KIM, Cheon Soo, 16678 Suwon-si (KR); AHN, Sang Hyuck, 16678 Suwon-si (KR); LEE, Bo Ra, 16687 Suwon-si (KR); WON, Jeong A, 16678 Suwon-si (KR); JIN, Su Kyung, 16678 Suwon-si (KR)
(74) Representative: Marks & Clerk LLP

(57) **Abstract**

Disclosed is an example embodiment of a secondary battery electrode including an electrode plate body including a first area and a second area, an active material layer applied on the first area, a ceramic layer applied on the second area, a coupling portion formed in the second area, and a tab welded to the coupling portion.

## Description

### BACKGROUND

### 1. Field

The present disclosure relates to a secondary battery electrode and a method of manufacturing the secondary battery electrode.

### 2. Discussion of Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

A secondary battery includes an electrode assembly including a pair of electrodes, that is, a positive electrode and a negative electrode, and a separator interposed between the pair of electrodes. A secondary battery electrode includes, for example, an electrode plate including a thin metal foil and an electrode active material applied and cured on one side surface or two side surfaces of the electrode plate.

In a secondary battery electrode, an area on which an electrode active material is not applied may be referred to as an uncoated portion, and an area on which an electrode active material is applied may be referred to as a mixture portion or a coated portion. The uncoated portion may cause a short circuit inside the cell.

The above information disclosed in this Background section is provided for enhancement of understanding of the background of the present disclosure, and, therefore, it may contain information that does not constitute related (or prior) art.

### SUMMARY

The present disclosure is directed to providing a secondary battery electrode in which a coating layer is additionally formed on each of uncoated portions of a positive electrode and a negative electrode, thereby preventing, or substantially preventing, a short circuit and allowing tab welding to be performed smoothly, and a method of manufacturing the secondary battery electrode.

These and other aspects and features of the present disclosure will be described in or will be apparent from the following description of some embodiments of the present disclosure.

According to an aspect of the present disclosure, there is provided a secondary battery electrode including an electrode plate body including a first area and a second area, an active material layer applied on the first area, a ceramic layer applied on the second area, a coupling portion formed in the second area, and a tab welded to the coupling portion.

The second area may be disposed at each of both sides of the first area.

An area of the coupling portion may be greater than or equal to a contact area of the tab.

The secondary battery electrode may further include an insulating pad configured to cover the coupling portion and the tab.

The secondary battery electrode may include a processing portion configured to process the ceramic layer to form the coupling portion.

The processing portion may laser-process the ceramic layer.

The secondary battery electrode may include a cover portion configured to cover the second area to form the coupling portion.

The cover portion may be a cover tape attached to the second area, and separated (or separable) from the second area to form the coupling portion when the ceramic layer is formed.

The cover portion may include a cover pattern portion formed in the second area, and a cover insertion portion inserted into the cover pattern portion, and when the ceramic layer is formed, the cover insertion portion may be separated (or separable) from the cover pattern portion to form the coupling portion.

According to another aspect of the present disclosure, there is provided a method of manufacturing a secondary battery electrode, the method including an active material coating operation of applying an active material layer on an electrode plate body, a ceramic coating operation of applying a ceramic layer on the electrode plate body excluding the active material layer, a processing operation of forming a coupling portion in the ceramic layer, and a welding operation of welding a tab to the coupling portion.

The electrode plate body may include a first area and a second area, the active material layer may be applied on the first area, and the ceramic layer may be applied on the second area disposed at each of both sides of the first area.

The processing operation may include laser-processing the ceramic layer to expose the second area to the outside.

According to still another aspect of the present disclosure, there is provided a method of manufacturing a secondary battery electrode, the method including an active material coating operation of applying an active material layer on an electrode plate body, a cover installing operation of installing a cover portion on the electrode plate body excluding the active material layer, a ceramic coating operation of applying a ceramic layer on the electrode plate body excluding the active material layer and the cover portion, a cover separating operation of separating the cover portion from the electrode plate body to form a coupling portion, and a welding operation of welding a tab to the coupling portion.

The cover installing operation may include attaching a cover tape to the electrode plate body.

The cover separating operation may include separating the cover tape from the electrode plate body.

The cover installing operation may include a pattern forming operation of forming a cover pattern portion on the electrode plate body, and a pattern inserting operation of inserting a cover insertion portion into the cover pattern portion.

The cover separating operation may include separating the cover insertion portion from the cover pattern portion.

In a secondary battery electrode according to the present disclosure, since an electrode plate body is coated with an active material layer and a ceramic layer, and a coupling portion formed by removing a portion of the ceramic layer is welded to a tab, the occurrence of sparks can be prevented or substantially prevented in a state in which the electrode plate body is embedded in a cell.

In a method of manufacturing a secondary battery electrode according to the present disclosure, when an active material layer and a ceramic layer are applied on an electrode plate body, and then a portion of the ceramic layer is removed through laser processing, a coupling portion welded to a tab can be exposed to the outside.

In a method of manufacturing a secondary battery electrode according to the present disclosure, after an active material layer is applied on an electrode plate body, a cover portion is mounted, and a ceramic layer is applied on the electrode plate body around the cover portion, when the cover portion is removed, the coupling portion welded to the tab can be exposed to the outside.

According to yet another aspect of the present disclosure, there are provided a battery pack manufactured using a battery with an improved structure, and a vehicle including the same.

However, the effects obtainable through the present disclosure are not limited to the above effects, and other technical effects that are not mentioned will be clearly understood by those skilled in the art from the following description of the present disclosure.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic plan view illustrating a secondary battery electrode according to one embodiment of the present disclosure;
FIG. 2 is a schematic cross-sectional view illustrating the secondary battery electrode according to one embodiment of the present disclosure;
FIG. 3 is a view comparing widths of a coupling portion and a tab according to one embodiment of the present disclosure;
FIG. 4 is a schematic view illustrating an installation state of an insulating pad according to one embodiment of the present disclosure;
FIG. 5 shows schematic views illustrating a state in which a coupling portion is formed using a processing portion according to a first embodiment of the present disclosure;
FIG. 6 is a schematic view illustrating a state in which a coupling portion is formed using cover tape according to a second embodiment of the present disclosure;
FIG. 7 is a schematic view illustrating a state in which a coupling portion is formed using a cover insertion portion according to a third embodiment of the present disclosure;
FIG. 8 is a schematic flowchart illustrating a method of manufacturing a secondary battery electrode to a first embodiment of the present disclosure;
FIG. 9 shows cross-sectional views illustrating processes of manufacturing the secondary battery electrode according to the first embodiment of the present disclosure;
FIG. 10 shows plan views illustrating the processes of manufacturing the secondary battery electrode according to the first embodiment of the present disclosure;
FIG. 11 is a schematic flowchart illustrating a method of manufacturing the secondary battery electrode according to a second embodiment and a third embodiment of the present disclosure;
FIG. 12 shows cross-sectional views illustrating processes of manufacturing the secondary battery electrode according to the second embodiment of the present disclosure;
FIG. 13 shows plan views illustrating the processes of manufacturing the secondary battery electrode according to the second embodiment of the present disclosure;
FIG. 14 shows cross-sectional views illustrating processes of manufacturing the secondary battery electrode according to the third embodiment of the present disclosure; and
FIG. 15 shows plan views illustrating the processes of manufacturing the secondary battery electrode according to the third embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as having a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

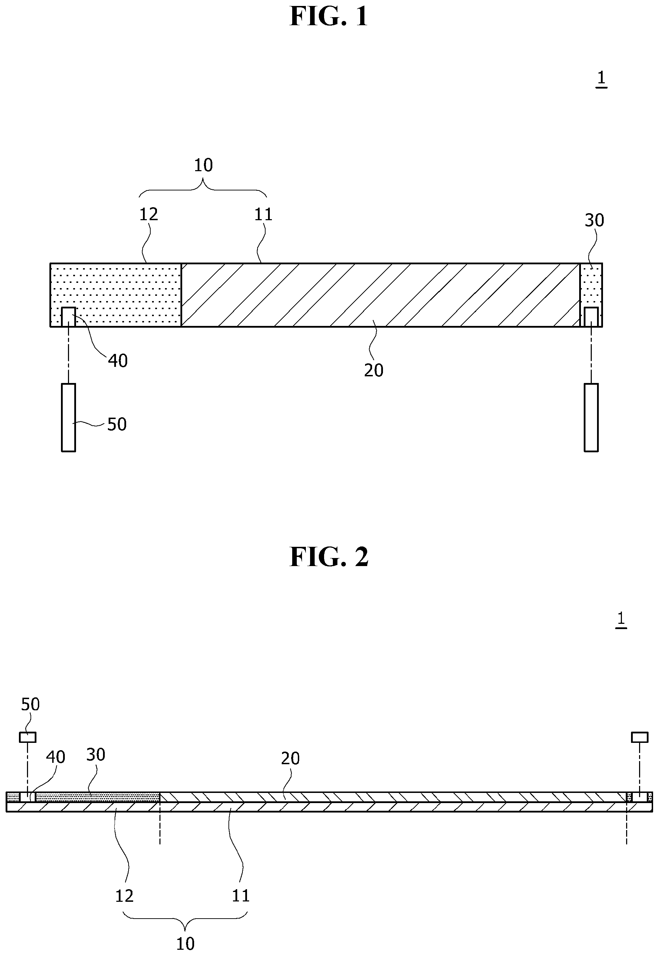

FIG. 1 is a schematic plan view illustrating a secondary battery electrode according to one embodiment of the present disclosure. FIG. 2 is a schematic cross-sectional view illustrating the secondary battery electrode according to one embodiment of the present disclosure. Referring to FIGS. 1 and 2, a secondary battery electrode 1 according to one embodiment of the present disclosure includes an electrode plate body 10, an active material layer 20, a ceramic layer 30, a coupling portion 40, and a tab 50.

The electrode plate body 10 may include a first area 11 and a second area 12. The electrode plate body 10 may be a positive or negative electrode plate of a secondary battery. The electrode plate body 10 may be a thin metal plate made of a material such as aluminum or copper. The first area 11 and the second area 12 may be separated in left and right longitudinal directions of the electrode plate body 10. The second area 12 may be disposed at each of both left and right sides of the first area 11.

The active material layer 20 may be applied on the first area 11. An active material slurry may be applied on the first area 11 to form the active material layer 20. The active material layer 20 may be applied on one or more surfaces of the first area 11. When the electrode plate body 10 is a positive electrode plate, the electrode plate body 10 may be coated with a positive electrode active material, and when the electrode plate body 10 is a negative electrode plate, the electrode plate body 10 may be coated with a negative electrode active material.

The ceramic layer 30 may be applied on the second area 12. A ceramic slurry may be applied on the second area 12 to form the ceramic layer 30. In addition, the ceramic layer 30 may be formed by applying a non-conductive material on the second area 12.

The coupling portion 40 may be formed in the second area 12. The coupling portion 40 may be formed in a portion of the second area 12. The coupling portion 40 may be an area in which the ceramic layer 30 is removed from the second area 12. The ceramic layer 30 may not be applied on the coupling portion 40, and thus the coupling portion 40 may be exposed to the outside. The coupling portion 40 may extend to an end of the electrode plate body 10. Excluding the coupling portion 40, the entire electrode plate body 10 may be coated with the active material layer 20 and the ceramic layer 30.

The tab 50 may be welded to the coupling portion 40. As an example, the tab 50 may be welded directly to the externally exposed coupling portion 40 to maintain a coupled state. When the electrode plate body 10 is a positive electrode plate, a positive electrode tab may be coupled, and when the electrode plate body 10 is a negative electrode plate, a negative electrode tab may be coupled.

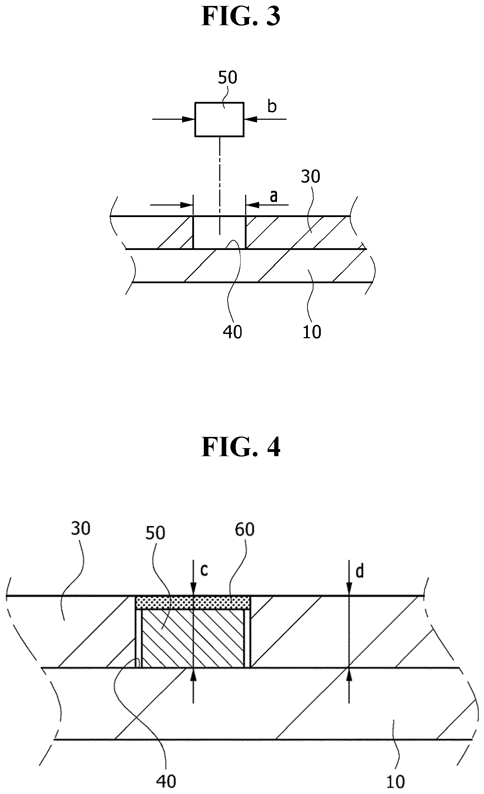

FIG. 3 is a view of comparing widths of the coupling portion and the tab according to one embodiment of the present disclosure. Referring to FIG. 3, an area of the coupling portion 40 may be designed to be greater than a contact area of the tab 50. That is, a width a of the coupling portion 40 may be designed to be greater than or equal to a width b of the tab 50. Thus, an entire coupling portion of the tab 50 in contact with the coupling portion 40 may be welded.

FIG. 4 is a schematic view illustrating an installation state of an insulating pad according to one embodiment of the present disclosure. Referring to FIG. 4, the secondary battery electrode 1 according to one embodiment of the present disclosure may further include an insulating pad 60. The insulating pad 60 may cover the coupling portion 40 and the tab 50. The insulating pad 60 may cover a gap space between the coupling portion 40 and the tab 50 or may cover the coupling portion 40 while covering the tab 50. A distance c from the electrode plate body 10 to an outer surface of the insulating pad 60 may correspond to a thickness d of the ceramic layer 30.

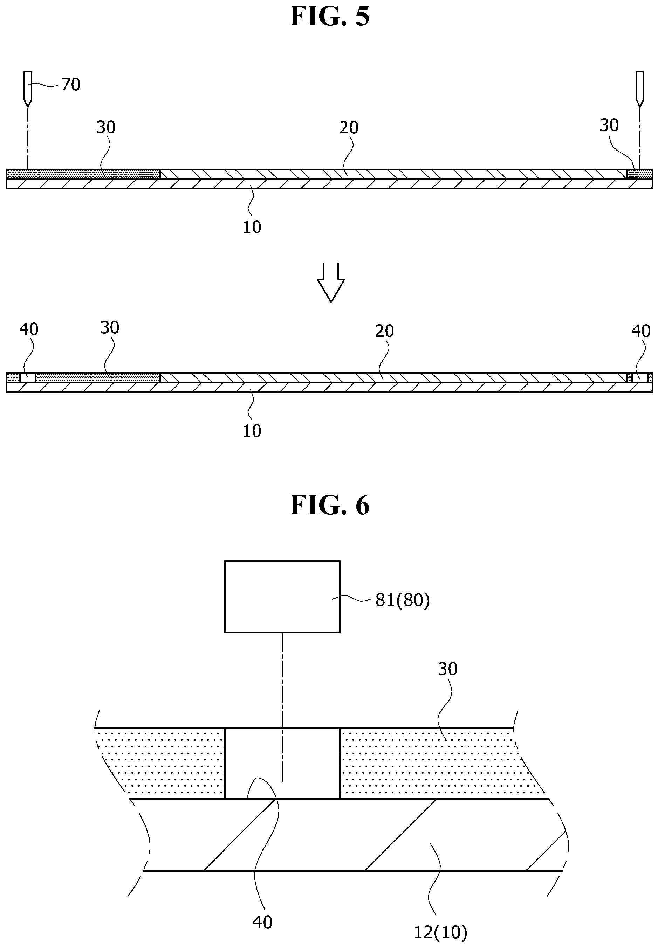

FIG. 5 shows schematic views illustrating a state in which the coupling portion is formed by a processing portion according to a first embodiment of the present disclosure. Referring to FIG. 5, a processing part 70 may process the ceramic layer 30 to form the coupling portion 40. More specifically, the processing part 70 may be a laser etcher that forms the coupling portion 40 by etching the ceramic layer 30 through laser processing. In addition, the coupling portion 40 may be formed by removing a portion of the ceramic layer 30 through various etching units.

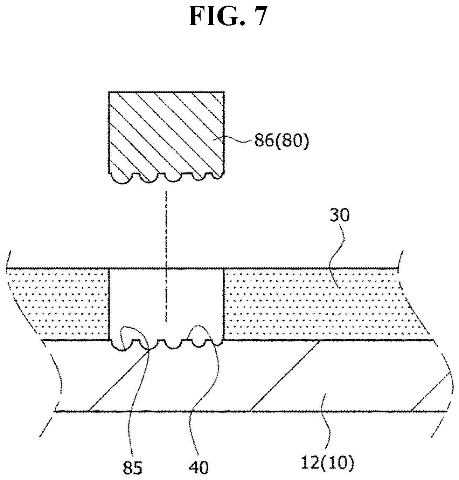

FIG. 6 is a schematic view illustrating a state in which the coupling portion is formed using cover tape according to a second embodiment of the present disclosure. FIG. 7 is a schematic view illustrating a state in which the coupling portion is formed using a cover insertion portion according to a third embodiment of the present disclosure. Referring to FIGS. 6 and 7, a cover 80 (a cover tape 81 or a cover insertion portion 86) may cover the second area 12 to form the coupling portion 40.

In the second embodiment of the present disclosure, the cover tape 81 may be attached to the second area 12, and when the ceramic layer 30 is formed, the cover tape 81 may be separated from the second area 12 to form the coupling portion 40. An area by which the cover tape 81 is attached to the second area 12 may correspond to an area of the coupling portion 40. The cover tape 81 may be provided with an adhesive and attached to the second area 12 and may include a material into which a ceramic slurry does not permeate.

In the third embodiment of the present disclosure, the cover pattern portion 85 may be formed in the second area 12, and a cover insertion portion 86 may be inserted into the cover pattern portion 85. The cover pattern portion 85 may be pressed by a pressing unit to have a concave-convex shape in which protrusions and recessions are alternately disposed. In addition, the cover pattern portion 85 may be formed in the second area 12 by forming a plurality of protrusions to be spaced apart from each other or forming a plurality of recessions to be spaced from each other. The cover insertion portion 86 may have a shape corresponding to the cover pattern portion 85 to be inserted into the cover pattern portion 85. The cover insertion portion 86 may be made of an elastic material and may be fitted into and coupled to the recessions formed in the cover pattern portion 85. On the other hand, the protrusions of the cover pattern portion 85 may be fitted and inserted into recessions formed in the cover insertion portion 86.

When the ceramic layer 30 is formed after the cover insertion portion 86 is inserted into the cover pattern portion 85, the cover insertion portion 86 may be separated from the cover pattern portion 85 to form the coupling portion 40. A length of the cover insertion portion 86 may be designed to be greater than a length of the cover pattern portion 85. Thus, a worker or work robot can remove the cover insertion portion 86 from the cover pattern portion 85 by grasping an end portion of the cover insertion portion 86 and then moving the cover insertion portion 86.

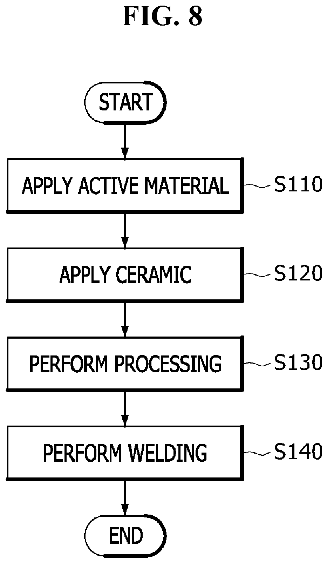

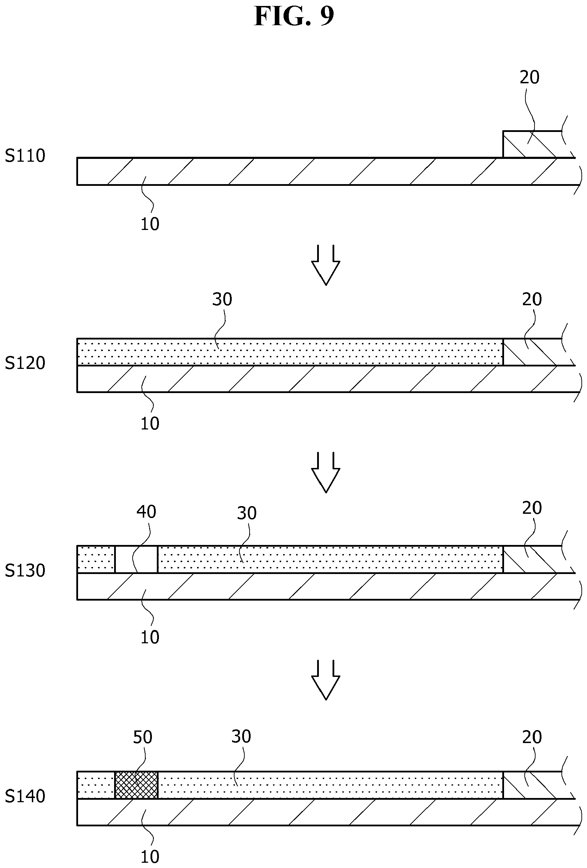

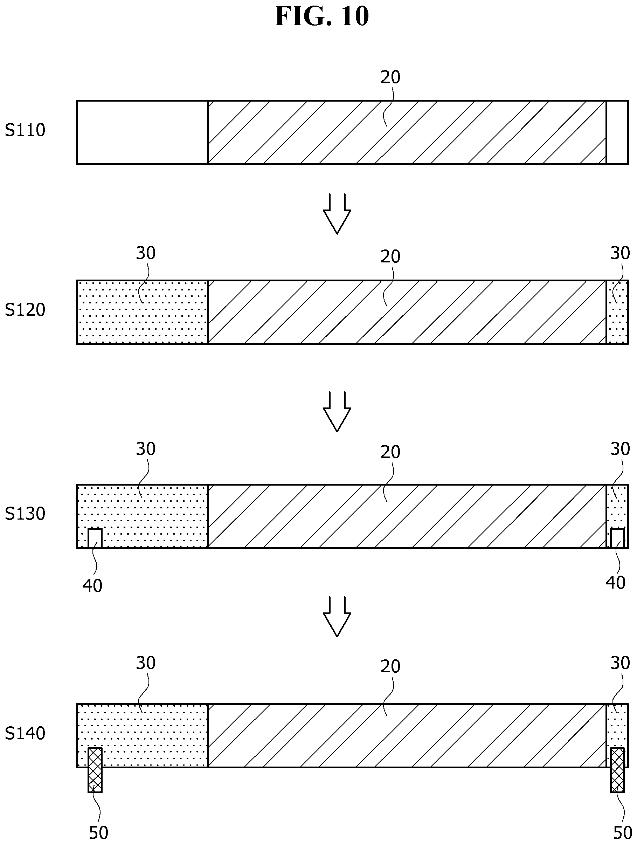

FIG. 8 is a schematic flowchart illustrating a method of manufacturing a secondary battery electrode according to a first embodiment of the present disclosure. FIG. 9 shows cross-sectional views illustrating processes of manufacturing the secondary battery electrode according to the first embodiment of the present disclosure. FIG. 10 shows plan views illustrating the processes of manufacturing the secondary battery electrode according to the first embodiment of the present disclosure. The method of manufacturing the secondary battery electrode according to the first embodiment of the present disclosure will be described below with reference to FIGS. 8 to 10.

In an active material coating operation S110, an active material layer 20 may be applied on an electrode plate body 10. The electrode plate body 10 may be divided into a first area 11 and a second area 12 in a longitudinal direction, and an active material may be applied on the first area 11 to form an active material layer 20.

Meanwhile, the second area 12 may be disposed at each of both sides of the first area 11. That is, the electrode plate body 10 may be divided into the second area 12, the first area 11, and the second area 12 in the longitudinal direction.

In a ceramic coating operation S120, a ceramic layer 30 may be applied on the electrode plate body 10 excluding the active material layer 20. The ceramic layer 30 may be formed by applying ceramic on the second area 12.

In a processing operation S130, a coupling portion 40 may be formed in the ceramic layer 30. When a processing part 70 removes a portion of the ceramic layer 30, the electrode plate body 10 may be exposed to form the coupling portion 40. When the processing part 70 etches a portion of the ceramic layer 30 through laser processing, a portion of the second area 12 of the electrode plate body 10 may be exposed to the outside.

In a welding operation S140, a tab 50 may be welded to the coupling portion 40. The tab 50 may be in surface contact with the coupling portion 40, and a surface contact portion may maintain a state of being coupled through welding.

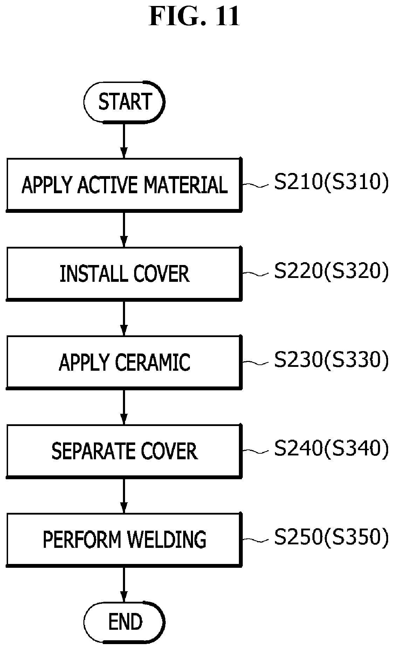

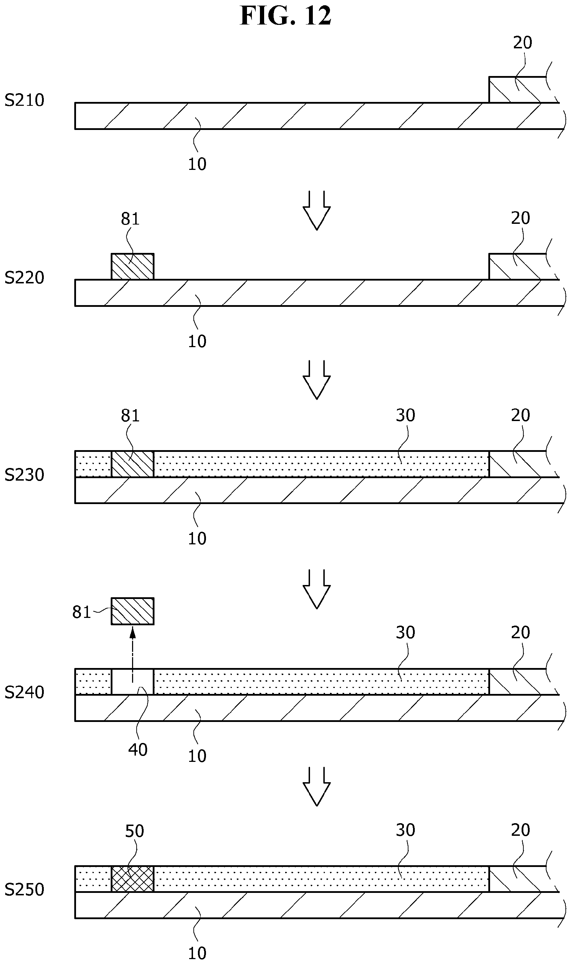

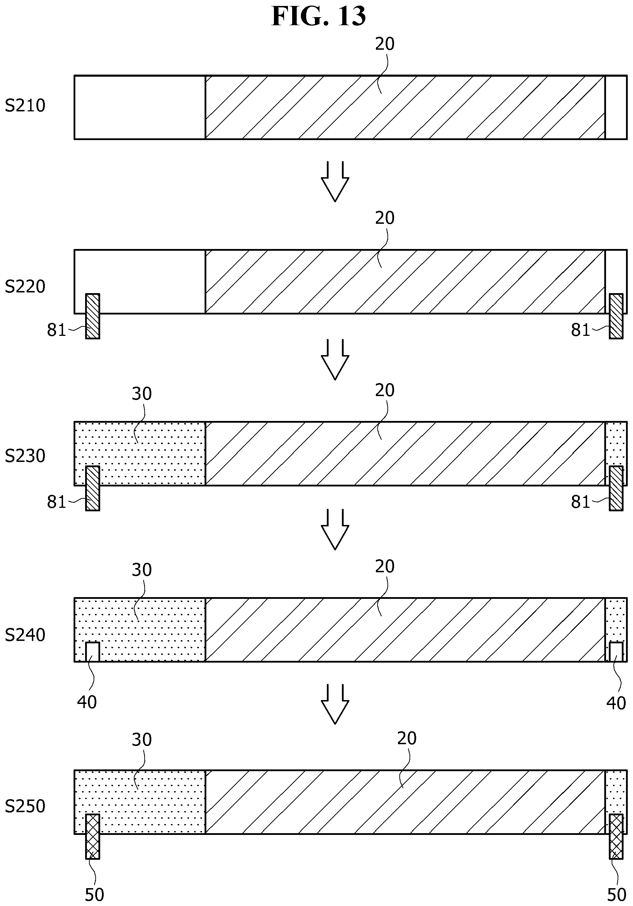

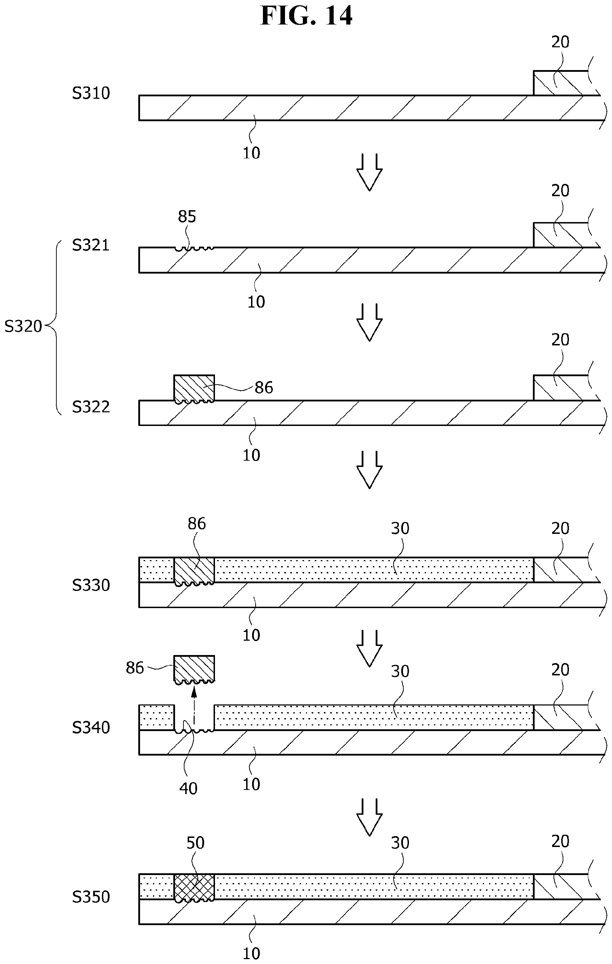

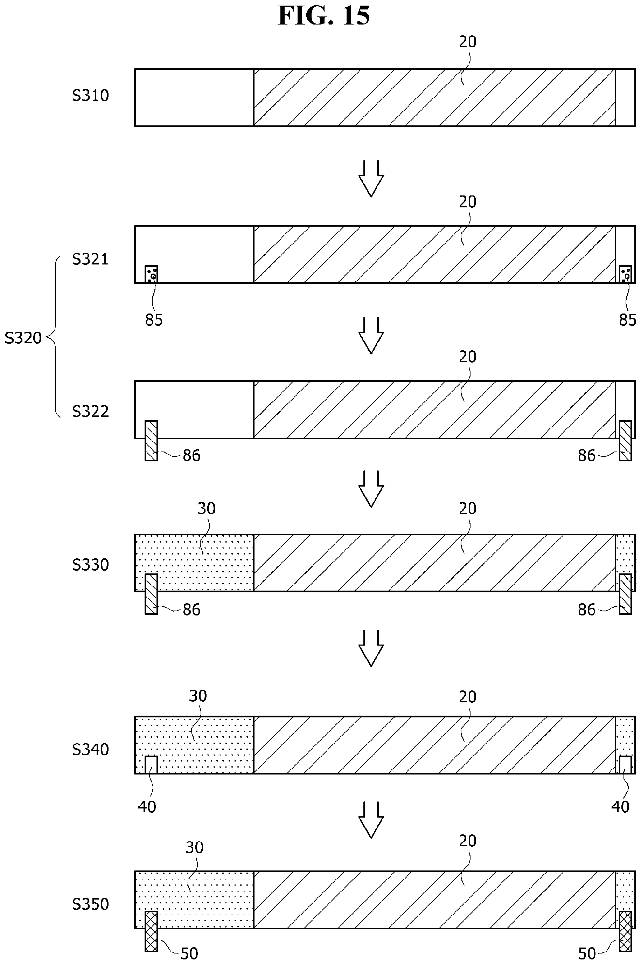

FIG. 11 is a schematic flowchart illustrating a method of manufacturing a secondary battery electrode to a second embodiment and a third embodiment of the present disclosure. FIG. 12 shows cross-sectional views illustrating processes of manufacturing the secondary battery electrode according to the second embodiment of the present disclosure. FIG. 13 shows plan views illustrating the processes of manufacturing the secondary battery electrode according to the second embodiment of the present disclosure. FIG. 14 shows cross-sectional views illustrating processes of manufacturing the secondary battery electrode according to the third embodiment of the present disclosure. FIG. 15 shows plan views illustrating the processes of manufacturing the secondary battery electrode according to the third embodiment of the present disclosure.

The method of manufacturing the secondary battery electrode according to the second embodiment of the present disclosure will be described below with reference to FIGS. 11 to 13.

In an active material coating operation S210, an active material layer 20 may be applied on an electrode plate body 10. The electrode plate body 10 may be divided into a first area 11 and a second area 12 in a longitudinal direction, and an active material may be applied on the first area 11 to form an active material layer 20.

Meanwhile, the second area 12 may be disposed at each of both sides of the first area 11. That is, the electrode plate body 10 may be divided into the second area 12, the first area 11, and the second area 12 in the longitudinal direction.

In cover installing operation S220, a cover portion 80 may be mounted on the electrode plate body 10 excluding the active material layer 20. A cover tape 81, which is an example of the cover portion 80, may be attached to the second area 12.

In a ceramic coating operation S230, a ceramic layer 30 may be applied on the electrode plate body 10 excluding the active material layer 20 and the cover portion 80. The ceramic layer 30 may be formed by applying ceramic on the second area 12 excluding the cover tape 81.

In a cover separating operation S240, the cover portion 80 may be separated from the electrode plate body 10 to form a coupling portion 40. The cover tape 81 may be separated from the electrode plate body 10 manually or by a robot, for example, and an area from which the cover tape 81 is removed may become the coupling portion 40.

In a welding operation S250, a tab 50 may be welded to the coupling portion 40. The tab 50 may be in surface contact with the coupling portion 40, and a surface contact portion may maintain a state of being coupled through welding.

The method of manufacturing a secondary battery electrode according to the third embodiment of the present disclosure will be described below with reference to FIGS. 11, 14, and 15.

In an active material coating operation S310, an active material layer 20 may be applied on an electrode plate body 10. The electrode plate body 10 may be divided into a first area 11 and a second area 12 in a longitudinal direction, and an active material may be applied on the first area 11 to form an active material layer 20.

Meanwhile, the second area 12 may be disposed at each of both sides of the first area 11. That is, the electrode plate body 10 may be divided into the second area 12, the first area 11, and the second area 12 in the longitudinal direction.

In a cover installing operation S320, a cover portion 80 may be mounted on the electrode plate body 10 excluding the active material layer 20. The cover installing operation S320 may include a pattern forming operation S321 and a pattern inserting operation S322.

In the pattern forming operation S321, a cover pattern portion 85 may be formed on the electrode plate body 10. The cover pattern portion 85 may be an area in which a concave-convex pattern is formed in a portion of the second area 12 by a separate pattern forming machine.

In the pattern inserting operation S322, a cover insertion portion 86 may be inserted into the cover pattern portion 85. The cover insertion portion 86 may include a buffer material and may cover the entire cover pattern portion 85. The cover insertion portion 86 may be inserted or pressed into recessed portions of the cover pattern portion 85 to stably maintain a temporarily fixed state.

In a ceramic coating operation S330, a ceramic layer 30 may be applied on the electrode plate body 10 excluding the active material layer 20 and the cover portion 80. Ceramic may be applied on the second area 12 excluding the cover insertion portion 86 inserted into the cover pattern portion 85, thereby forming the ceramic layer 30.

In a cover separating operation S340, the cover portion 80 may be separated from the electrode plate body 10 to form a coupling portion 40. The cover insertion portion 86 may be separated from the cover pattern portion 85 manually or by a robot, for example, and the cover pattern portion 85 from which the cover pattern portion 85 is removed may become the coupling portion 40.

In a welding operation S350, a tab 50 may be welded to the coupling portion 40. The tab 50 may be in surface contact with the coupling portion 40, and a surface contact portion may maintain a state of being coupled through welding. In this case, a contact area between the tab 50 and the cover pattern portion 85 may be increased, thereby improving a coupling force.

In a secondary battery electrode 1 according to the present disclosure, since an electrode plate body 10 is coated with an active material layer 20 and a ceramic layer 30, and a coupling portion 40 formed by removing a portion of the ceramic layer 30 is welded to a tab 50, an occurrence of sparks can be prevented or substantially prevented in a state in which the electrode plate body 10 is embedded in a cell.

In a method of manufacturing a secondary battery electrode according to the present disclosure, when an active material layer 20 and a ceramic layer 30 are applied on an electrode plate body 10, and then a portion of the ceramic layer 30 is removed through laser processing, a coupling portion 40 welded to a tab 50 can be exposed to the outside.

In a method of manufacturing a secondary battery electrode according to the present disclosure, after an active material layer 20 is applied on an electrode plate body 10, a cover portion 80 is mounted, and a ceramic layer 30 is applied on the electrode plate body 10 around the cover portion 80, and when the cover portion 80 is removed, the coupling portion 40 welded to the tab 50 can be exposed to the outside.

Although the present invention has been described with reference to embodiments and drawings illustrating aspects thereof, the present invention is not limited thereto. Various modifications and variations can be made by a person skilled in the art to which the present invention belongs within the scope of the present invention and the claims and equivalents thereto.

## Claims

1. A secondary battery electrode comprising:
an electrode plate body including a first area and a second area;
an active material layer applied on the first area;
a ceramic layer applied on the second area;
a coupling portion formed in the second area; and
a tab welded to the coupling portion.

2. The secondary battery electrode of claim 1, wherein the second area is disposed at each of both sides of the first area.

3. The secondary battery electrode of claim 1 or claim 2, wherein an area of the coupling portion is greater than or equal to a contact area of the tab.

4. The secondary battery electrode of any one of the preceding claims, further comprising an insulating pad configured to cover the coupling portion and the tab.

5. The secondary battery electrode of any one of the preceding claims, comprising a processing portion configured to process the ceramic layer to form the coupling portion.

6. The secondary battery electrode of claim 5, wherein the processing portion is configured to laser-process the ceramic layer.

7. The secondary battery electrode of any one of the preceding claims, comprising a cover portion configured to cover the second area to form the coupling portion.

8. The secondary battery electrode of claim 7, wherein the cover portion is a cover tape attached to the second area, and separable from the second area to form the coupling portion when the ceramic layer is formed.

9. The secondary battery electrode of claim 7, wherein the cover portion includes a cover pattern portion formed in the second area, and a cover insertion portion inserted into the cover pattern portion, and
when the ceramic layer is formed, the cover insertion portion is separable from the cover pattern portion to form the coupling portion.

10. A method of manufacturing a secondary battery electrode, the method comprising:
an active material coating operation of applying an active material layer on an electrode plate body;
a ceramic coating operation of applying a ceramic layer on the electrode plate body excluding the active material layer;
a processing operation of forming a coupling portion in the ceramic layer; and
a welding operation of welding a tab to the coupling portion.

11. The method of claim 10, wherein the electrode plate body includes a first area and a second area,
the active material layer is applied on the first area, and
the ceramic layer is applied on the second area disposed at each of both sides of the first area.

12. The method of claim 10 or claim 11, wherein the processing operation includes laser-processing the ceramic layer to expose the second area to the outside.

13. A method of manufacturing a secondary battery electrode, the method comprising:
an active material coating operation of applying an active material layer on an electrode plate body;
a cover installing operation of installing a cover portion on the electrode plate body excluding the active material layer;
a ceramic coating operation of applying a ceramic layer on the electrode plate body excluding the active material layer and the cover portion;
a cover separating operation of separating the cover portion from the electrode plate body to form a coupling portion; and
a welding operation of welding a tab to the coupling portion.

14. The method of claim 13, wherein the cover installing operation includes attaching a cover tape to the electrode plate body, and optionally wherein the cover separating operation includes separating the cover tape from the electrode plate body.

15. The method of claim 13, wherein the cover installing operation includes a pattern forming operation of forming a cover pattern portion on the electrode plate body, and a pattern inserting operation of inserting a cover insertion portion into the cover pattern portion, and optionally wherein the cover separating operation includes separating the cover insertion portion from the cover pattern portion.
